(19) **Europäisches Patentamt European Patent Office Office européen des brevets**

(11) **EP 3 656 121 B1**

(12) **EUROPEAN PATENT SPECIFICATION**

(45) Date of publication and mention
of the grant of the patent:
**22.03.2023 Bulletin 2023/12**

(21) Application number: **18887869.8**

(22) Date of filing: **07.12.2018**

(51) International Patent Classification (IPC):
*H04N 9/73* (2006.01)       *H04N 5/217* (2006.01)
*H04N 1/60* (2006.01)       *H04N 5/225* (2006.01)
*H04N 5/232* (2006.01)       *H04N 9/04* (2006.01)

(52) Cooperative Patent Classification (CPC):
**H04N 1/6052; H04N 23/45; H04N 23/651;
H04N 23/69; H04N 23/80; H04N 23/81;
H04N 23/843; H04N 23/88**

(86) International application number:
**PCT/KR2018/015538**

(87) International publication number:
**WO 2019/117549 (20.06.2019 Gazette 2019/25)**

(54) **IMAGING APPARATUS AND IMAGING METHOD**

BILDGEBUNGSVORRICHTUNG UND BILDGEBUNGSVERFAHREN

APPAREIL D'IMAGERIE ET PROCÉDÉ D'IMAGERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2017   JP 2017240130
05.10.2018   KR 20180119309**

(43) Date of publication of application:
**27.05.2020   Bulletin 2020/22**

(73) Proprietor: **Samsung Electronics Co., Ltd.
Gyeonggi-do 16677 (KR)**

(72) Inventor: **MORIYA, Tsuyoshi
Yokohama-shi, Kanagawa 230--0027 (JP)**

(74) Representative: **HGF
HGF Limited
1 City Walk
Leeds LS11 9DX (GB)**

(56) References cited:
WO-A2-2014/199338       JP-A- H08 126 021
US-A1- 2006 056 056       US-A1- 2008 122 949
US-A1- 2013 300 892       US-A1- 2016 182 874
US-A1- 2017 104 980       US-A1- 2017 230 585

## Description

### Technical Field

The disclosure relates to an imaging apparatus, an imaging method, and a recording medium, and more particularly, to an imaging apparatus capable of reducing the deviation of an output image when imaging modules with different spectral sensitivities are replaced with each other, an imaging method, a computer program product and a recording medium.

### Background Art

Recently, smartphones with two imaging modules with different focal lengths, that is, a wide-angle imaging module and a telephoto imaging module, have been released onto the market. These smartphones enlarge an image captured by a wide-angle imaging module when zooming is performed using a digital zoom, and when an output image reaches a certain magnification, the smartphones replace the output image with an image captured by the telephoto imaging module and output the image. However, since spectral sensitivities of the two imaging modules do not coincide with each other, there is a problem in that the deviation of an image, particularly the deviation of color or brightness, is visible to a user on a preview display screen at the time of replacement of the output image.

US 2017/230585 A1 discloses devices and methods for providing seamless preview images for multi-camera devices having two or more asymmetric cameras. A multi-camera device may include two asymmetric cameras disposed to image a target scene. The multi-camera device further includes a processor coupled to a memory component and a display, the processor configured to retrieve an image generated by a first camera from the memory component, retrieve an image generated by a second camera from the memory component, receive input corresponding to a preview zoom level, retrieve spatial transform information and photometric transform information from memory, modify at least one image received from the first and second cameras by the spatial transform and the photometric transform, and provide on the display a preview image comprising at least a portion of the at least one modified image and a portion of either the first image or the second image based on the preview zoom level.

WO 2014/199338 A2 discloses a dual-aperture zoom digital camera operable in both still and video modes. The camera includes Wide and Tele imaging sections with respective lens/sensor combinations and image signal processors and a camera controller operatively coupled to the Wide and Tele imaging sections. The Wide and Tele imaging sections provide respective image data. The controller is configured to combine in still mode at least some of the Wide and Tele image data to provide a fused output image from a particular point of view, and to provide without fusion continuous zoom video mode output images, each output image having a given output resolution, wherein the video mode output images are provided with a smooth transition when switching between a lower zoom factor (ZF) value and a higher ZF value or vice versa, and wherein at the lower ZF the output resolution is determined by the Wide sensor while at the higher ZF value the output resolution is determined by the Tele sensor.

### Disclosure of Invention

### Technical Problem

As described above, there is a problem in that the deviation of an output image maybe visible to a user at the time of replacement of an imaging module because an image captured by a wide-angle imaging module and an image captured by a telephoto imaging module are replaced with each other without adjustment of the deviation of color or brightness.

### Solution to Problem

The invention is set out in the appended claims.

### Brief Description of Drawings

The above and other aspects, features, and advantages of certain embodiments of the disclosure will be more apparent from the following description taken in conjunction with the accompanying drawings, in which:

FIGS. 1A to 1C are block diagrams of an imaging apparatus according to an embodiment;
FIG. 2 is a block diagram of an imaging module according to an embodiment;
FIG. 3 is a diagram of block division of an image according to an embodiment;
FIG. 4A is a flowchart of image processing according to an embodiment;
FIG. 4B is a flowchart of image processing according to an embodiment;
FIG. 4C is a flowchart of image processing according to an embodiment;
FIG. 5A is an example of an image captured using an imaging module according to an embodiment; and

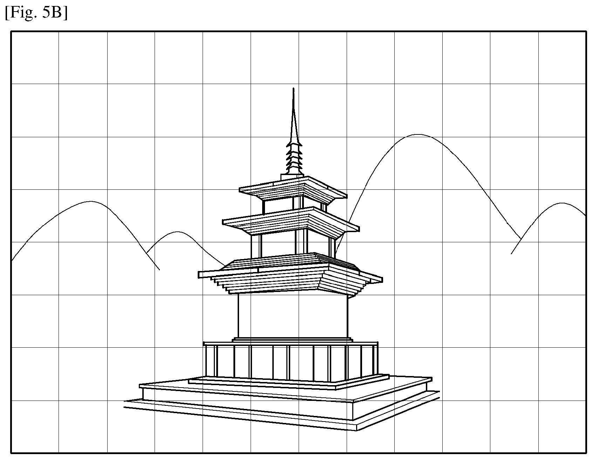

FIG. 5B is an example of an image captured using an imaging module according to an embodiment.

### Mode for the Invention

Reference will now be made in detail to one or more embodiments, examples of which are illustrated in the accompanying drawings, wherein like reference numerals refer to like elements throughout. In this regard, the one or more embodiments may have different forms and should not be construed as being limited to the descriptions set forth herein. Accordingly, the one or more embodiments are merely described below, by referring to the figures, to explain aspects. Expressions such as "at least one of," when preceding a list of elements, modify the entire list of elements and do not modify the individual elements of the list.

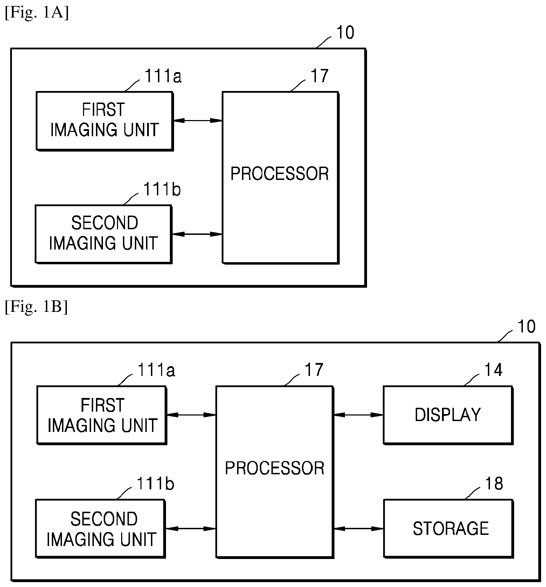

FIGS. 1A to 1C are block diagrams of an imaging apparatus according to an embodiment.

In FIGS. 1A to 1C, the number of imaging modules is limited to two in order to simplify the explanation, but the embodiment is not limited thereto and may include two or more imaging modules.

As shown in FIG. 1A, an imaging apparatus 10 may include a first imaging unit 111a, a second imaging unit 111b, and a processor 17. However, the imaging apparatus 10 may be implemented by a larger number of components than components shown in FIG. 1A. For example, as shown in FIG. 1B, the imaging apparatus 10 according to an embodiment may further include a storage 18 and a display 14.

Although FIGS. 1A and 1B show that the imaging apparatus 10 includes one processor 17, the embodiment is not limited thereto. The imaging apparatus 10 may include a plurality of processors. When the imaging apparatus 10 includes a plurality of processors, some or all of operations and functions of the processor 17 described later below may be performed by the plurality of processors.

The imaging apparatus 10 may include a plurality of imaging units including the first imaging unit 111a and the second imaging unit 111b. Focal lengths and spectral sensitivities of the first imaging unit 111a and the second imaging unit 111b may have different focal lengths and spectral sensitivities.

For example, the first imaging unit 111a may be a wide-angle imaging module including a wide-angle lens, and the second imaging unit 111b may be a telephoto imaging module including a telephoto lens. Therefore, the first imaging unit 111a and the second imaging unit 111b may have different spectral sensitivities. In addition, the focal length of the first imaging unit 111a may be shorter than the focal length of the second imaging unit 111b.

According to an embodiment, the first imaging unit 111a and the second imaging unit 111b may include one or more image capturing components configured to capture an image. According to another embodiment, the first imaging unit 111a and the second imaging unit 111b may include imaging sensors configured to capture an image.

The imaging apparatus 10 may capture a subject using the first imaging unit 111a for wide-angle imaging when a zoom magnification is equal to or greater than 1.0x and is equal to or less than 2.0x (i.e., between 1.0 times the original capture and 2.0 times the original capture inclusive). Further, when the zoom magnification is greater than 2.0x times and equal to or less than 4.0x (i.e., between 2.1 times the original capture and 4.0 times the original capture inclusive), the imaging apparatus 10 captures the subject using the second imaging unit 111b for telephoto imaging. In the imaging apparatus 10 according to the embodiment, the subject is captured by appropriately dividing the wide-angle lens (the first imaging unit 111a) and the telephoto lens (the second imaging unit 111b) according to the zoom magnification. The zoom magnification may be operated by the user.

The processor 17 may replace a first captured image captured by the first imaging unit 111a with a second captured image captured by the second imaging unit 11 1b by the zoom magnification operated by a user and may output the replaced image as an output image. When the processor 17 replaces the first captured image captured by the first imaging unit 111a with the second captured image captured by the second imaging unit 111b and outputs the second captured image, the processor 17 may control replacement of the first capture image with the second captured image such that a difference between first output image information of the first captured image and second output image information of the second captured image captured image in· formation is equal to or less than a certain value. The processor 17 acquires image in· formation of a captured image captured by each of the plurality of first and second imaging units 111a and 11 1b and corrects an output image based on the image in· formation such that the difference between the first output image information and the second output image information is equal to or less than a certain value when the captured image is replaced.

For example, the image information may include at least one of a white balance gain and a brightness of the captured image. For example, output image information may include at least one of a color balance and the brightness of the captured image.

When the processor 17 replaces the first captured image captured by the first imaging unit 111a with the second captured image captured by the second imaging unit 111b and outputs the second captured image, the processor 17 may correct image in· formation of the second captured image based on the first output image information of the first captured image and the second output image information of the second captured image. When the processor 17 replaces the first captured image with the second captured image and outputs the second captured image, the processor 17 may correct the image information of the second captured image such that the difference between the first output image information and the second output image information is equal to or less than a certain value. The processor 17 outputs the second captured image by applying the corrected image information, thereby reducing the deviation when the captured image is switched.

The storage 18 may store information including a parameter for a block statistics image (block statistics S), a white balance gain W g, and color reproduction correction and a parameter for image signal processing such as a gamma correction table. The storage 18 may also store the captured image captured by the first imaging unit 111a or the second imaging unit 111b.

When the first imaging unit 111a is completely replaced by the second imaging unit 111b and the second imaging unit 111b is activated, the processor 17 may refer to a correction parameter of the first imaging unit 111a stored in the storage 18 before actively replacing the first imaging unit 11 la with the second imaging unit 1 1b. When the first imaging unit 111a is replaced by the second imaging unit 111b, the processor 17 may process such that a color of the output image (second captured image) after re· placement approximates a color of the output image (first captured image) before re· placement based on the correction parameter.

The image display 14 may display the captured image captured by either the first imaging unit 111a or the second imaging unit 111b, which is activated with the captured image being actively converted, as an output image.

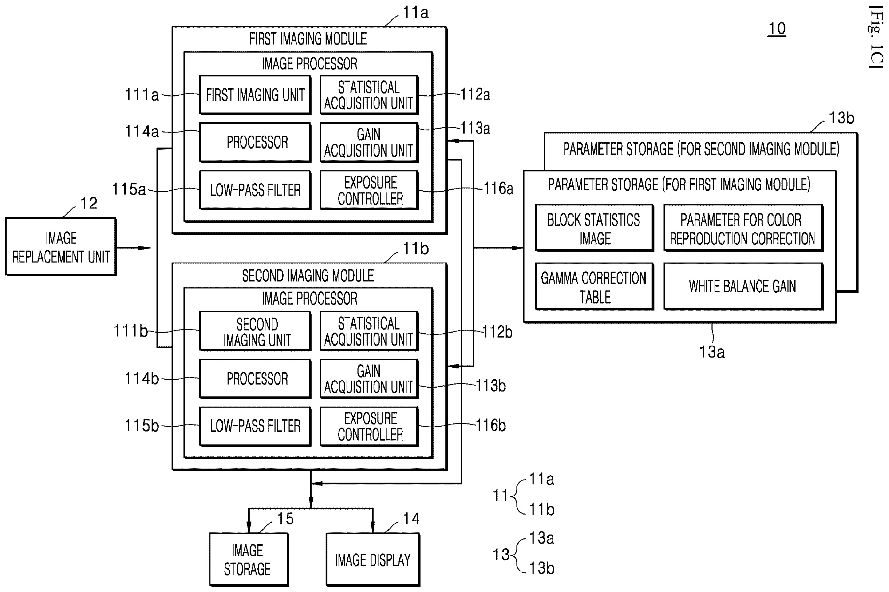

FIG. 1C shows a specific block diagram of the imaging apparatus 10 according to the embodiment.

The processor 17 of FIGS. 1A and 1B may correspond to the image processor of the first imaging module 11a and the image processor of the second imaging module 11b. The image processor of the first imaging module 11a and the image processor of the second imaging module 11b may include statistical acquisition units 112a and 112b, gain acquisition units 113a and 113b, processors 114a and 114b, low-pass filters 115a and 115b, exposure controllers 116a and 116b, and an image replacement unit 12 of FIG. 1C. Accordingly, the processor 17 of FIGS. 1A and 1B may include at least one of the statistical acquisition units 112a and 112b, the gain acquisition units 113a and 113b, the processors 114a and 114b, the low-pass filters 115a and 115b, the exposure controllers 116a and 116b, and the image replacement unit 12 of FIG. 1B, according to an embodiment. According to another embodiment, the processor 17 of FIGS. 1A and 1B may be configured to perform one or more operations of a corresponding con• figuration of the statistical acquisition units 112a and 112b, the gain acquisition units 113a and 113b, the processors 114a and 114b, the low-pass filters 115a and 115b, the exposure controllers 116a and 116b, and the image replacement unit 12. Thus, the above description with respect to the processor 17 may be applied to the operations of the corresponding configuration.

The storage 18 of FIG. 1B may correspond to the parameter storages 13a and 13b and an image storage 15 of FIG. 1C. Therefore, the storage 18 of FIG. 1B may include at least one of the parameter storage 13a and the parameter storage 13b and the image storage 15 of FIG. 1C, or may perform the operations of the configuration. Thus, the above description with respect to the storage 18 may be applied to the operations of the corresponding configuration.

As shown in FIG. 1C, the imaging apparatus 10 may include an imaging module 11, the image replacement unit 12, a parameter storage 13, an image display 14, and the image storage 15.

The imaging module 11 may include a first imaging module 11a and a second imaging module 11b.

The first imaging module 11a may include a first imaging unit 111a, a statistics acquisition unit 112a, a gain acquisition unit 113a, a processor 114a, a low-pass filter 115a, and an exposure controller 116a. The second imaging module 11b may include a second imaging unit 111b, a statistics acquisition unit 112b, a gain acquisition unit 113b, a processor 114b, a low-pass filter 115b, and an exposure controller 116b.

The first imaging module 11a may include the first imaging unit 111a realized by hardware such as a lens, an iris, and a shutter or a signal processing circuit for processing signals of a captured image captured by the first imaging unit 111a. According to an embodiment, the first imaging unit 111a and the second imaging unit 111b may include one or more image capturing components configured to capture an image. According to another embodiment, the first imaging unit 111a and the second imaging unit 111b may include imaging sensors configured to capture an image. A configuration of the second imaging module 11b may also be same as that of the first imaging module 11a.

For example, the first imaging module 11a is a wide-angle imaging module and the second imaging module 11b is a telephoto imaging module. Therefore, the first imaging unit 11 la and the second imaging unit 111b may have different spectral sensi• tivities. Furthermore, a focal length of the first imaging unit 11 la of the first imaging module 11a may be shorter than a focal length of the second imaging unit 111b of the second imaging module 11b. The first imaging unit 11 la and the second imaging unit 111b may be collectively referred to as an imaging unit 111.

The first imaging unit 11 la may include a wide-angle lens to function as a wide- angle imaging module. The second imaging unit 111b may include a telephoto lens for functioning as a telephoto imaging module. The imaging apparatus 10 captures a subject using the first imaging unit 111a for wide-angle imaging when a zoom magni• fication is equal to or greater than 1.0x and is equal to or less than 2.0x (i.e., between 1.0 times the original capture and 2.0 times the original capture inclusive). . Further, when the zoom magnification is greater than 2.0x times and equal to or less than 4.0x (i.e., between 2.1 times the original capture and 4.0 times the original capture inclusive), the imaging apparatus 10 captures the subject using the second imaging unit 111b for telephoto imaging. In the imaging apparatus 10 according to the embodiment, the subject is captured by appropriately dividing the wide-angle lens (the first imaging module 11a) and the telephoto lens (the second imaging module 11b) according to the zoom magnification. The zoom magnification may be operated by the user.

The image replacement unit 12 may replace a first captured image captured by the first imaging module 1 la with a second captured image captured by the second imaging module 11b by the zoom magnification operated by a user and may output the replaced image as an output image.

The image replacement unit 12 uses the first imaging module 11a for wide-angle imaging and outputs a first imaging image digitally zoomed at a certain magnification as an output image when the zoom magnification is, for example, equal to or greater than 1.0x and equal to or less than 2.0x. Furthermore, the image replacement unit 12 uses the second imaging module 11b for wide-angle imaging and outputs a second imaging image digitally zoomed at a certain magnification as an output image when the zoom magnification is, for example, equal to or greater than 2. lx and equal to or less than 4.0x.

The parameter storage 13 may include the parameter storage 13a and the parameter storage 13b. The parameter storage 13 may store a block statistics image (a block statistics S), a white balance gain W g, a parameter for color reproduction correction, and a parameter for image signal processing such as a gamma correction table of the imaging module 11. The parameter storage 13 may also be referred to as an image signal processing parameter storage.

The gain acquisition unit 113 acquires image information of a captured image captured by each of a plurality of imaging units 111. That is, the gain acquisition unit 113a acquires image information of a first captured image captured by the first imaging unit 111a. The gain acquisition unit 113b acquires image information of a second captured image captured by the second imaging unit 111b. Specific processing of the gain acquisition unit 113 will be described below.

The image information acquired by the gain acquisition unit 113 is, for example, the white balance gain W g of the captured image. That is, the gain acquisition unit 113 acquires the white balance gain W g based on the color type of a captured image captured by each of the plurality of imaging units 111.

The gain acquisition unit 113a and the gain acquisition unit 113b may be collectively referred to as the gain acquisition unit 113. The gain acquisition unit 113a may be referred to as a first acquisition unit, and the gain acquisition unit 113b may be referred to as a second acquisition unit. A gain acquisition unit may be referred to as an ac• quisition unit.

When a processor 114 replaces the first captured image captured by the first imaging unit 11 la from among the plurality of imaging units 111 with the second captured image captured by the second imaging unit 111b from among the plurality of imaging units 111 and outputs the second captured image, the processor 114 may control re· placement of the first capture image with the second captured image such that a difference D between first output image information of the first captured image and second output image information of the second captured image is equal to or less than a certain value D th· When the processor 17 replaces the first captured image with the second captured image and outputs the second captured image, the processor 17 may correct the image information of the second captured image such that the difference D between the first output image information and the second output image information is equal to or less than a certain value D th.

The first output image information may be, for example, a color balance C ba of the first captured image captured by the first imaging unit 111a. The second output image information may be, for example, a color balance C bb of the second captured image captured by the second imaging unit 111b.

When is completely replaced by and the second imaging module 11b is activated, the processor 114b may refer to a correction parameter of the first imaging module 11a stored in the parameter storage unit 13a before actively replacing the first imaging module 11a with the second imaging module 11b. Next, when the imaging module 11 is replaced, the processor 114b may process the image captured by the second imaging module 11b such that a color of the output image (second captured image) after re· placement approximates a color of the output image (first captured image) before re· placement. The processor 17 corrects the image information of the second captured image such that the difference D between the first output image information and the second output image information is a certain value or less and applies the corrected image information to output the second captured image, thereby reducing the deviation when the captured images are switched.

The processor 114 controls the difference D between the first output image m- formation and the second output image information of the second captured image to be equal to or less than the certain value D th , thereby reducing the deviation of an output image when an imaging module is replaced. The processor 114a and the processor 114b are collectively referred to as the processor 114.

In addition, the processor 114 may be provided outside the imaging module 11. In this case, the processor 114 refers to a correction parameter of the first imaging module 11a stored in the parameter storage unit 13a before being actively replaced, and when the imaging module 11 is replaced, processes the image captured by the second imaging module 11b such that the color of an output image after replacement ap•proximates the color of an output image before replacement.

Furthermore, when the first captured image is output, the processor 114 turns off the power of the second imaging module 11b. In addition, when the second captured image is output, the processor 114 turns off the power of the first imaging module 11a.

Accordingly, power consumption of the imaging apparatus 10 may be reduced by the processor 114 turning off the power of an imaging module on an inactive side.

According to another embodiment, instead of turning off the power, the processor 114 may reduce or stop power supplied to a portion in the imaging module on the inactive side to be in a rest state.

The image display 14 may display a captured image captured by either the first imaging module 11a or the second imaging module 11b, which is activated and the captured image is actively converted, as an output image.

The image storage 15 stores the captured image captured by the imaging module of either the first imaging module 11a or the second imaging module 11b, which is activated.

According to an embodiment, the imaging apparatus 10, when an imaging module having different spectral sensitivity is replaced, controls the color of an output image captured by using an imaging module after replacement so as to approximate the color of an output image captured by using an imaging module before replacement.

According to an embodiment, the imaging apparatus 10, when an imaging module having different spectral sensitivity is replaced, adjusts the color of an output image captured by using an imaging module after replacement so as to approximate the color of an output image captured by using an imaging module before replacement.

Therefore, an imaging apparatus, an imaging method, and a recording medium capable of reducing the deviation of an output image when imaging modules with different spectral sensitivities are replaced with each other may be provided. As a result, the imaging apparatus may seamlessly transition between the image captured by the first imaging module 11a and the second imaging module 11b such that a user would be unable to visually notice any deviation in the output image during the transition, and thus the user may not sense discomfort during the transition between the image captured by the first imaging module 1 la and the second imaging module 11b.

Furthermore, according to an embodiment, power consumption of the imaging apparatus 10 may be reduced by the imaging apparatus 10 turning power of an imaging module on the inactive side off or being in a rest state.

An imaging module according to an embodiment will be described.

The first imaging module 11 a, which is one of the plurality of imaging modules 11, will be described. Since imaging modules other than the first imaging module 1 la are also the same, description thereof will be omitted.

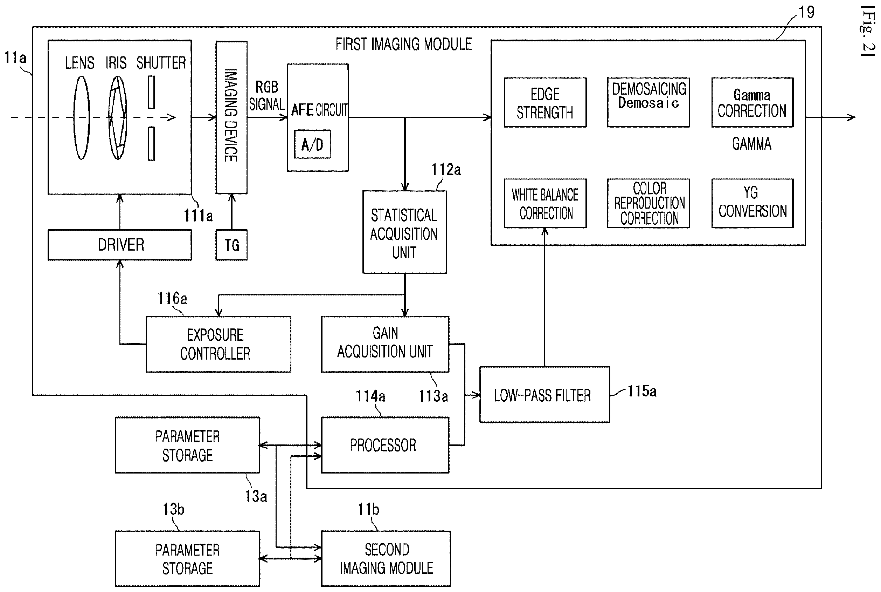

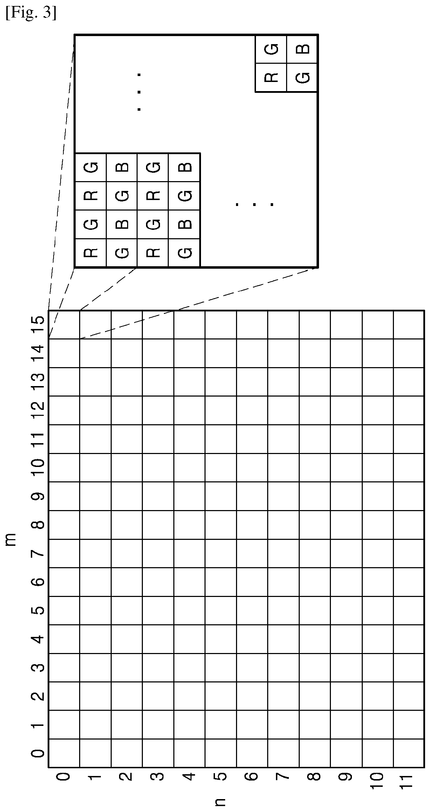

FIG. 2 is a block diagram of an imaging module according to an embodiment and FIG. 3 is a diagram of block division of an image according to an embodiment.

In FIG. 2, connection with the image replacement unit 12, connection with the image display 14, and connection with the image storage 15 are omitted for the sake of simplicity.

As shown in FIG. 2, the first imaging module 11a may further include an imaging apparatus, an analog front end (APE) circuit, an image signal processing circuit, a driver, and a timing generator (TG) in addition to the first imaging unit 111a, the statistics acquisition unit 112a, the gain acquisition unit 113a, the processor 114a, the low-pass filter 115a, and the exposure controller 116a. The first imaging unit 11 la may include a lens, an iris, and a shutter.

An RGB (red, green, blue) color signal output from an imaging device of the first imaging module 11a is subjected to signal processing by a correlated double sampling (CDS) circuit (not shown). An RGB signal after the signal processing is analog/digital (A/D) converted in the AFE circuit. A pre-process such as defective pixel correction and black level correction is performed on an image signal obtained after the *AID* conversion

According to an embodiment, an image signal processing circuit 19 may perform a plurality of electronic processes such as white balance correction, Bayer color correction, color reproduction correction, edge strength correction, demosaicing, color reproduction correction, YG correction and gamma correction, and the processing image (image information) is stored.

In general, the difference in color occurs depending on an illumination light source between a captured image observed with a naked eye and a captured image captured using an imaging apparatus. The white balance correction of the image signal processing circuit shown in FIG. 2 is a process for causing a white subject to be re· produced in white. For example, natural light such as sunlight and artificial light such as a fluorescent lamp have different color temperatures of both light sources.

Therefore, white reproducibility of the captured image is greatly influenced. The white balance correction is intended to prevent incongruity in the reproduced captured mage.

Also, according to an embodiment, the gain acquisition unit 113 may be referred to as a first white balance acquisition unit, and the processor 114 may be referred to as a second white balance acquisition unit. Further, a statistical acquisition unit 112 may be referred to as an image block statistics circuit, and the low-pass filter 115 may be referred to as a white balance low-pass filter.

The statistics acquisition unit 112 divides a captured image captured by each of the plurality of imaging units 111 into a plurality of blocks. As shown in FIG. 3, for example, the statistics acquisition unit 112 divides an image area of the captured image into blocks of n in a vertical direction and m in a horizontal direction. However, n and m are natural numbers. Each of the divided blocks includes a plurality of RGB pixels.

The statistics acquisition unit 112 statistically processes a plurality of RGB pixel values for each of the divided blocks to acquire the block statistics S. The statistical processing is, for example, a process of integrating the plurality of RGB pixel values to acquire an integrated value, or averaging the plurality of RGB pixel values to acquire an average value.

The statistics acquisition unit 112 stores the acquired block statistics S in the parameter storage 13. The block statistics is also referred to as image block statistics. The statistics acquisition unit 112a and the statistics acquisition unit 112b may collectively be referred to as the statistics acquisition unit 112.

Meanwhile, the gain acquisition unit 113 acquires image information based on the acquired block statistics S. The image information is, for example, the white balance gain W g of a captured image.

According to an embodiment, when an image replacement unit 12 replaces the first captured image with the second captured image and outputs the second captured image, the processor 114 makes the amount of change U from first output image m• formation to second output image information at a certain time T h be equal to or less than a certain amount of change U h-

Accordingly to an embodiment, the low-pass filter 115 may smoothly change the output image when the imaging module 11 is replaced by controlling the amount of change U from the first output image information to the second output image in· formation at the certain time Th to be equal to or less than the certain amount of change Uh. When the imaging module 11 is replaced, the low-pass filter 115 may smoothly change the output image by correcting a correction parameter of the second output image such that the amount of change U from the first output image information to the second output image information at the certain time This equal to or less than the certain amount of change Uh.

The white balance gain W g is acquired by referring to the block statistics S and subject brightness B v and by judging whether the captured image is to be achromatic or chromatic. A method of acquiring the white balance gain W g thus acquired is referred to as a white balance acquisition method. The subject brightness B v is acquired from exposure control information, a shutter speed, and a sensor sensitivity acquired by the exposure controller 116a.

An exposure controller 116 controls an iris (exposure control information), a shutter speed, and an analog gain of the imaging unit 111 to determine (control) exposure of input image information Rd. The exposure controller 116a and the exposure controller 116b may be collectively referred to as the exposure controller 116.

The imaging module 11 performs white balance correction or exposure control according to the block statistics S acquired by the statistics acquisition unit 112.

Hereinafter, operations of the imaging apparatus 10 according to an embodiment will be described.

In the disclosure, for the sake of simplicity, it is assumed that the first imaging module 11a is a wide-angle imaging module and the second imaging module 11b is a telephoto imaging module, and a case of replacing the first imaging module 1 la with the second imaging module 11 b will be described. However, the embodiment is not limited thereto, and the following description may be applied even when the second imaging module 11b is replaced with the first imaging module 11a.

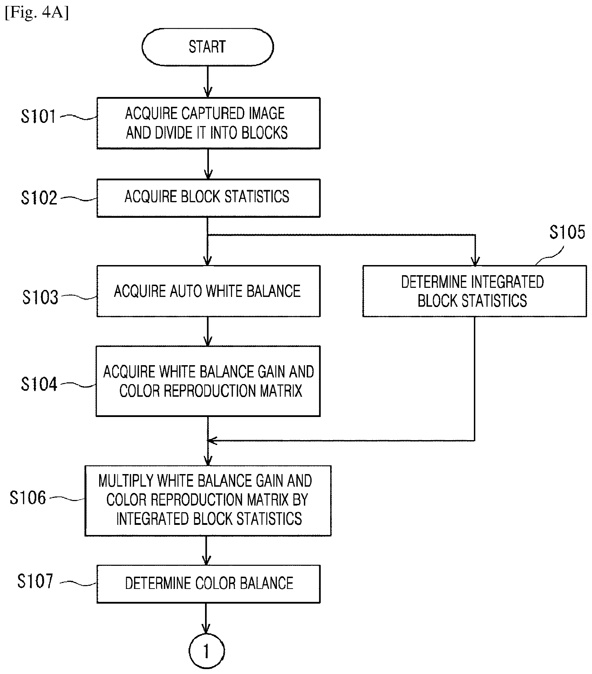

FIG. 4A is a flowchart of image processing according to an embodiment. For example, FIG. 4A is a flowchart illustrating image processing of a captured image captured by a wide-angle imaging module.

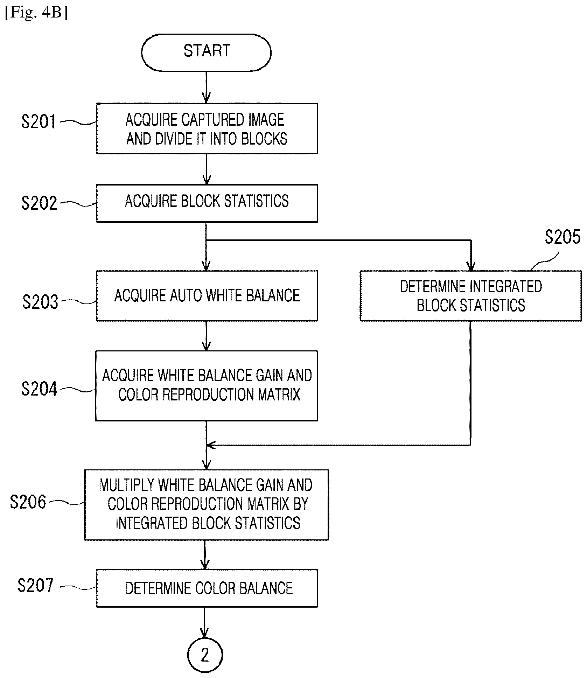

FIG. 4B is a flowchart of image processing according to an embodiment. For example, FIG. 4B is a flowchart illustrating image processing of a captured image captured by a telephoto imaging module.

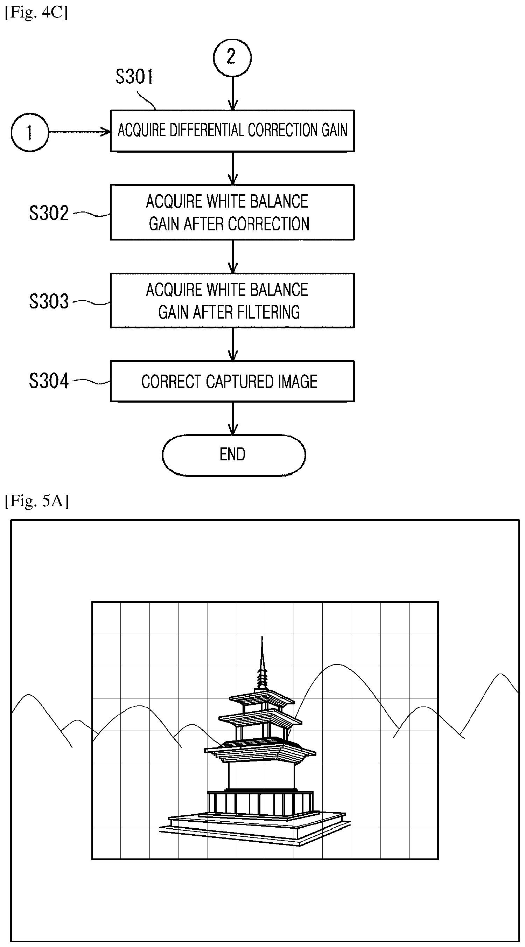

FIG. 4C is a flowchart of image processing according to an embodiment.

As shown in FIG. 4A, the first imaging module 11a acquires a captured image before the replacement unit 12 replaces the first imaging module 11a with another imaging module such as a second imaging module 11b. As shown in FIG. *SA,* in operation S101, the captured image acquired by the first imaging module 11a is divided into blocks. The first imaging module 11a may be a wide-angle imaging module, and FIG. *SA* is an example of a captured image captured using the wide-angle imaging module.

The first imaging module 11a acquires block statistics Sa, before the replacement, and stores the block statistics S a in the parameter storage 13a.

In operation S 102, the processor 114a acquires the block statistics S a of the first imaging module 11a stored in the parameter storage 13a. According to an embodiment, the processor 114a maybe a second white balance acquisition unit.

In operation S103, auto white balance Awa is determined from the block statistics Sa·

In operation S104, the gain acquisition unit 113a of the first imaging module 11a acquires a white balance gain W ga according to the block statistics S a and subject brightness B va- In operation S104, the gain acquisition unit 113a acquires color re· production matrix C ma According to an embodiment, the gain acquisition unit 113a maybe the first white balance acquisition unit.

Furthermore, the white balance gain is also referred to as a first white balance gain.

In operation S105, the processor 114a integrates the block statistics Sa and acquires integrated block statistics S sa- According to an embodiment, the integrated block statistics S sa may be determined by averaging the plurality of RGB pixel values to acquire an average value.

In operation S106, the white balance gain W ga and the color reproduction matrix C ma are multiplied by the integrated block statistics S sa of the first imaging module 11a.

In operation S 107, determine, as a result of the multiplication in operation S 106, the color balance C ba of the entire captured image. The color balance C ba of the first captured image captured by the first imaging unit

11 la of the first imaging module 1 la is also referred to as first output image information.

Furthermore, the processing from operation S102 to operation S 107 may be performed every frame in the active imaging module 11 and the result may be stored in the parameter storage 13. The processing from operation S102 to operation S107 may be performed only once immediately after the imaging module 11 after replacement is activated. The activation is also referred to as driving.

Meanwhile, the second imaging module 11b acquires, after the replacement, the color balance C bb of the entire captured image as in operations S201 to S207 shown in FIG. 4B, similarly to the first imaging module 11a before replacement. A second imaging module 12a may be a telephoto imaging module, and FIG. *SB* is an example of an image captured using the telephoto imaging module.

The second imaging module 11b multiplies the white balance gain W gb and the color reproduction matrix C mb of the second imaging module 11b by the integrated block statistics S sb obtained by integrating the block statistics S b- and acquires the color balance C bb of the entire captured image. The color balance C bb of the second captured image captured by the second imaging unit 111b of the second imaging module 11b is also referred to as second output image information.

Subsequently, as shown in FIG. 4C, in operation S301, a differential correction gain coefficient G de, in which the color balance C bb of the entire captured image after re· placement coincides with the color balance C ba of the entire captured image before re· placement, is determined.

The differential correction gain coefficient G de may be determined by dividing the color balance C ba of the entire captured image before replacement by the color balance C bb of the entire captured image after replacement.

The differential correction gain coefficient G de may be denoted as Equation 1.

[Equation 1]
$$Gdc = CbYcbb$$

In operation S302 after operation S301, white balance gain W egb after correction is determined by multiplying the white balance gain W gb of the second imaging module llb after replacement by the differential correction gain coefficient G de· Normalization may be performed such that the minimum of each white balance gain W g of RGB is 110

The white balance gain W gb of the second imaging module 11b before correction may be referred to as a first white balance gain. The white balance gain W egb after correction is also referred to as a second white balance gain.

The white balance gain W egb after correction of the second imaging module 11b after replacement may be denoted as Equation 2.

[Equation 2]
$$Wcgb = WgbxGdc$$

In operation S303 after operation S302, white balance gain W cgb after filtering for setting a white balance correction unit of the image signal processing circuit (see FIG 2) is acquired using the low-pass filter 115b of the second imaging module 1 lb after replacement.

In more detail, the low-pass filter 115b of the second imaging module 11b acquires the white balance gain W cgb after filtering for smoothly changing from the white balance gain W cgb after correction to the white balance gain W gb at the certain time T h The certain time T his, for example, 30 frames.

The white balance gain W cgb after correction of the second imaging module 11b may be denoted by LPF (W gl» W cgb) as Equation 3.

[Equation 3]
$$Wfgb = LPF(Wgb, Wcgb)$$

LPF (W gl» W cgb) is a function using the white balance gain W gb of the second imaging module 11b before correction and the white balance gain W cgb after correction of the second imaging module 11b as parameters.

In operation S304 after operation S303, the image signal processing circuit 19 including a white balance correction of the second imaging module 11b corrects a captured image based on the white balance gain W fgb after filtering.

Thus, at the time of replacement of the imaging module 11, the color deviation of an output image may be reduced, and color of the output image may be smoothly and pro• gressively changed in time series.

Meanwhile, in an imaging apparatus according to another embodiment, image in- formation acquired by the gain acquisition unit 113 is, for example, brightness B d of a captured image. First output image information of a first captured image captured by the first imaging unit 111a is brightness B <la of the first captured image captured by the first imaging unit 11 1a. Second output image information of a second captured image captured by the second imaging unit 111b is brightness B db of the second captured image captured by the second imaging unit 111b.

An imaging apparatus according to an embodiment may adjust a digital gain D g such that the brightness B d of an output image captured using the imaging module 11 before replacement coincides with the brightness B d of an output image at the time of re· placement. Therefore, the imaging apparatus according to the embodiment may reduce brightness deviation at the time of replacement of a captured image. Brightness is also referred to as a G level signal or a G signal.

In an imaging apparatus according to an embodiment, a captured image captured by the imaging module 11 is input as the input image information R ct, subjected to various gain processing, and output as an output image. Output image information P d of the imaging module 11 is obtained by multiplying the input image information R ct, the white balance gain W g, the digital gain D g, color reproduction matrix C m, and gamma correction coefficient y.

The output image information Pct of the imaging module 11 may be denoted as Equation 4.

$$[\text{Equation 4}]$$
$$Pd = Rd \times Wg \times Dg \times Cm \times y$$

An exposure controller 116 controls a shutter speed, an iris, and an analog gain to determine exposure of a captured input image. In an imaging apparatus according to an embodiment, the brightness B ct is controlled (adjusted) by the digital gain D ct. The input image information may also be referred to as RAW data.

In more detail, the imaging apparatus 10 adjusts the digital gain D ct such that an m- tegrated value of brightness (G signal) of an output image of the first imaging module 11a before replacement coincides with an integrated value of the brightness (G signal) of an output image of the second imaging module 11b after replacement.

When the digital gain D ct is 1.0 or less, there is a problem in that a high luminance pixel becomes pink. In order to set the digital gain D ct to a value greater than 1.0, the exposure controller 116b of the second imaging module 11b after replacement is controlled to expose with underexposure and brightness (a G signal integrated value) is controlled using the digital gain D ct so as to coincide with the brightness of the first imaging module 11a before replacement. Underexposure is, for example, -0.3 EV.

Thereafter, a control value of the exposure controller 116b of the second imaging module 11b after replacement is adjusted over several frames until normal exposure is obtained from the underexposure and the digital gain Dg is also controlled to be 1.0 over several frames.

By controlling in this way by the imaging apparatus according to an embodiment, it is possible to reduce brightness deviation of an output image at the time of replacement of the imaging module 11. As a result, the disclosure may provide an imaging apparatus, an imaging method, and a recording medium capable of reducing the deviation of an output image when imaging modules with different spectral sensi• tivities are replaced with each other.

Furthermore, the imaging apparatus 10 may set the digital gain D ct to 1.0 except when the imaging module 11 is replaced (normally) and may use the digital gain D ct set to 1.0 at the time of replacement of the imaging module 11.

The above-described embodiment has described the disclosure as a hardware configuration. However, the disclosure is not limited thereto. The disclosure may also be executed by, for example, software on a personal computer (PC). The disclosure may also be realized by executing a computer program in a central processing unit (CPU) of a PC, for example, for processing each component. The computer program may be stored and supplied to a computer using various types of non-transitory computer readable media. The non-transitory computer readable media include, for example, a magnetic recording medium, a magneto-optical recording medium, CD-ROM (read only memory), and a semiconductor memory. In addition, the computer program may be supplied by the non-transitory computer readable media, or may be supplied via a wired communication path or a wireless communication path.

Furthermore, the disclosed embodiments may be implemented in a software (S/W) program that includes instructions stored on a computer-readable storage medium.

The computer may include an image transmitting apparatus and an image receiving apparatus according to the disclosed embodiments, which is a device capable of calling stored instructions from a storage medium and operating according to the disclosed embodiments according to the called instructions.

The computer-readable storage medium may be provided in the form of a non-transitory storage medium. Here, the term 'non-transitory' means that a storage medium does not include a signal and is tangible, and does not distinguish whether data is stored in the storage medium semi-permanently or temporarily.

Also, the embodiments may be provided by being included in a computer program product. The computer program product is a product that may be traded between a seller and a purchaser.

The computer program product may include a software program and a computer- readable storage medium having recorded thereon the software program. For example, the computer program product may include a product (for example, a downloadable application) in a form of a software program electronically distributed through an electronic market (for example, Google Play or Appstore) or a manufacturer of a patient monitoring apparatus. For electronic distribution, at least a part of the software program may be stored in a storage medium or may be temporarily generated. In this case, the storage medium may be a storage medium of a server of the manufacturer, a server of the electronic market, or a relay server that temporarily stores the software program.

The computer program product may include a storage medium of a server or a storage medium of a terminal in a system composed of a server and a terminal (e.g., the image transmitting apparatus or the image receiving apparatus). Alternatively, when there is a third device (e.g., a smartphone) in communication with the server or terminal, the computer program product may include a storage medium of the third device. Alternatively, the computer program product may include the S/W program itself transmitted from the server to the terminal or the third device, or transmitted from the third device to the terminal.

In this case, one of the server, the terminal, and the third device may execute the computer program product to perform methods according to the disclosed embodiments. Alternatively, two or more of the server, the terminal and the third device may execute the computer program product to distribute the methods according to the disclosed embodiments.

For example, the server (e.g., a cloud server or an artificial intelligence server, etc.) may execute a computer program product stored on the server to control the terminal in communication with the server to perform the methods according to the disclosed em•bodiments.

As another example, a third device may execute a computer program product to control a terminal in communication with to a third device to perform a method according to the disclosed embodiment. As a specific example, the third device may remotely control an imaging apparatus to acquire or output a captured image.

When the third device executes the computer program product, the third device may download the computer program product from the server and execute the downloaded computer program product. Alternatively, the third device may execute a computer program product provided in a preloaded manner to perform methods according to the disclosed embodiments.

The disclosure may provide an imaging apparatus, an imaging method, and a recording medium capable of reducing the deviation of an output image when imaging modules with different spectral sensitivities are replaced with each other.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein.

**Claims**

1. An imaging apparatus comprising:

   a first imaging unit configured to capture a first image of a subject;
   a second imaging unit configured to capture a second image of the subject; and
   at least one processor configured to:

      selectively obtain one of the first image or the second image to be output as an output image based on a magnification characteristic of the output image;
      based on the first image being replaced with the second image as the output image, determine a corrected white balance gain ($W_{cgb}$) by correcting a white balance gain ($W_{gb}$) obtained for the second image based on a first color balance of the first image and a second color balance of the second image;
      obtain a filtered white balance gain ($W_{fgb}$) based on the white balance gain ($W_{gb}$) and the corrected white balance gain ($W_{cgb}$) to smoothly change the white balance gain applied to the second image, from the corrected white balance gain ($W_{cgb}$) to the white balance gain ($W_{gb}$) during a certain time to obtain the output image; and
      output the output image based on a correction to the second image based on the filtered white balance gain of the second image.

2. The imaging apparatus of claim 1, wherein the at least one processor is configured to correct the white balance gain of the second image such that a difference between a first value corresponding to the first color balance and a second value corresponding to the second color balance is equal to or less than a certain value.

3. The imaging apparatus of claim 1, wherein the at least one processor is further configured to divide the second image into a plurality of blocks and determine the white balance gain based on an integrated value or an average value of RGB pixel values included in each of the plurality of blocks.

4. The imaging apparatus of claim 1, wherein the first color balance is obtained by a first processor,

   wherein the first imaging unit and the first processor are included in a first imaging module,
   wherein the second color balance is obtained by a second processor,
   wherein the second imaging unit and the second processor are included in a second imaging module,
   wherein the at least one processor is further configured to turn off the power of the second imaging module when the first image is output as the output image, and
turn off the power of the first imaging module when the second image is output as the output image.

5. The imaging apparatus of claim 1, wherein the first imaging unit and the second imaging unit have different focal lengths and spectral sensitivities.

6. An imaging method comprising:

capturing a first image of a subject by a first imaging unit;
capturing a second image of a subject by a second imaging unit;
selectively obtaining, by at least one processor, one of the first image and the second image to be output as an output image based on a magnification characteristic of the output image;
based on the first image being replaced with the second image as the output image,
determining a corrected white balance gain ($W_{cgb}$) by correcting a white balance gain ($W_{gb}$) obtained for the second image based on a first color balance of the first image and a second color balance of the second image;
obtaining a filtered white balance gain ($W_{fgb}$) based on the white balance gain ($W_{gb}$) and the corrected white balance gain ($W_{cgb}$) to smoothly change the white balance gain applied to the second image from the corrected white balance gain ($W_{cgb}$) to the white balance gain ($W_{gb}$) during a certain time, to obtain the output image; and
outputting the output image based on a correction to the second image based on the filtered white balance gain of the second image.

7. The imaging method of claim 6, wherein the white balance gain of the second image is corrected such that a difference between a first value corresponding to the first color balance and a second value corresponding to the second color balance is equal to or less than a certain value.

**Patentansprüche**

1. Bildgebungsvorrichtung, umfassend:

eine erste Bildgebungseinheit, die konfiguriert ist, um ein erstes Bild eines Objekts aufzunehmen;
eine zweite Bildgebungseinheit, die konfiguriert ist, um ein zweites Bild des Objekts aufzunehmen; und
mindestens einen Prozessor, der konfiguriert ist, um:

selektiv eines von dem ersten Bild oder dem zweiten Bild zu erhalten, das als Ausgabebild auszugeben ist, basierend auf einer Vergrößerungseigenschaft des Ausgabebilds;
basierend darauf, dass das erste Bild durch das zweite Bild als das Ausgabebild ersetzt wird, eine korrigierte Weißabgleichverstärkung ($W_{cgb}$) zu bestimmen, indem eine für das zweite Bild erhaltene Weißabgleichverstärkung ($W_{gb}$) basierend auf einem ersten Farbausgleich des ersten Bildes und einem zweitem Farbausgleich des zweiten Bildes korrigiert wird;
eine gefilterte Weißabgleichverstärkung ($W_{fgb}$) basierend auf der Weißabgleichverstärkung ($W_{gb}$) und der korrigierten Weißabgleichverstärkung ($W_{cgb}$) zu erhalten, um die auf das zweite Bild angewendete Weißabgleichverstärkung sanft von der korrigierten Weißabgleichverstärkung ($W_{cgb}$) in die Weißabgleichverstärkung ($W_{gb}$) während einer bestimmten Zeit zu ändern, um das Ausgabebild zu erhalten; und
das Ausgabebild basierend auf einer Korrektur des zweiten Bildes basierend auf der gefilterten Weißabgleichverstärkung des zweiten Bildes auszugeben.

2. Bildgebungsvorrichtung nach Anspruch 1, wobei der mindestens eine Prozessor konfiguriert ist, um die Weißabgleichverstärkung des zweiten Bildes derart zu korrigieren, dass eine Differenz zwischen einem ersten Wert, der dem ersten Farbausgleich entspricht, und einem zweiten Wert, der dem zweiten Farbausgleich entspricht, gleich oder kleiner als ein bestimmter Wert ist.

3. Bildgebungsvorrichtung nach Anspruch 1, wobei der mindestens eine Prozessor ferner konfiguriert ist, um das zweite Bild in eine Vielzahl von Blöcken zu unterteilen und die Weißabgleichverstärkung basierend auf einem integrierten Wert oder einem Durchschnittswert von RGB-Pixelwerten zu bestimmen, die in jedem der Vielzahl von Blöcken enthalten sind.

4. Bildgebungsvorrichtung nach Anspruch 1, wobei der erste Farbausgleich durch einen ersten Prozessor erhalten wird

wobei die erste Bildgebungseinheit und der erste Prozessor in einem ersten Bildgebungsmodul enthalten sind,
wobei der zweite Farbausgleich von einem zweiten Prozessor erhalten wird,
wobei die zweite Bildgebungseinheit und der zweite Prozessor in einem zweiten Bildgebungsmodul enthalten sind,

wobei der mindestens eine Prozessor ferner konfiguriert ist, um die Stromversorgung des zweiten Bildgebungsmoduls auszuschalten, wenn das erste Bild als das Ausgabebild ausgegeben wird, und den Strom des ersten Bildgebungsmoduls auszuschalten, wenn das zweite Bild als Ausgabebild ausgegeben wird.

5. Bildgebungsvorrichtung nach Anspruch 1, wobei die erste Bildgebungseinheit und die zweite Bildgebungseinheit unterschiedliche Brennweiten und spektrale Empfindlichkeiten aufweisen.

6. Bildgebungsverfahren, umfassend:

Aufnehmen eines ersten Bildes eines Objekts durch eine erste Bildgebungseinheit;
Aufnehmen eines zweiten Bildes eines Objekts durch eine zweite Bildgebungseinheit;
selektives Erhalten, durch mindestens einen Prozessor, eines von dem ersten Bild und dem zweiten Bild, das als ein Ausgabebild auszugeben ist, basierend auf einer Vergrößerungseigenschaft des Ausgabebildes;
basierend darauf, dass das erste Bild durch das zweite Bild als Ausgabebild ersetzt wird, Bestimmen einer korrigierten Weißabgleichverstärkung ($W_{cgb}$), indem eine für das zweite Bild erhaltene Weißabgleichverstärkung ($W_{gb}$) basierend auf einem ersten Farbausgleich des ersten Bildes und einem zweitem Farbausgleich des zweiten Bildes korrigiert wird;
Erhalten einer gefilterten Weißabgleichverstärkung ($W_{fgb}$) basierend auf der Weißabgleichverstärkung ($W_{gb}$) und der korrigierten Weißabgleichverstärkung ($W_{cgb}$), um die auf das zweite Bild angewendete Weißabgleichverstärkung sanft von der korrigierten Weißabgleichverstärkung ($W_{cgb}$) in die Weißabgleichverstärkung ($W_{gb}$) während einer bestimmten Zeit zu ändern, um das Ausgabebild zu erhalten; und
Ausgeben des Ausgabebildes basierend auf einer Korrektur des zweiten Bildes basierend auf der gefilterten Weißabgleichverstärkung des zweiten Bildes.

7. Bildgebungsverfahren nach Anspruch 6, wobei die Weißabgleichverstärkung des zweiten Bildes derart korrigiert wird, dass eine Differenz zwischen einem ersten Wert, der dem ersten Farbausgleich entspricht, und einem zweiten Wert, der dem zweiten Farbausgleich entspricht, gleich oder kleiner als ein bestimmter Wert ist.

**Revendications**

1. Appareil d'imagerie comprenant :

une première unité d'imagerie configurée pour capturer une première image d'un sujet ;
une seconde unité d'imagerie configurée pour capturer une seconde image du sujet ; et
au moins un processeur configuré pour :

obtenir sélectivement l'une de la première image ou de la seconde image à émettre en sortie en tant qu'image de sortie sur la base d'une caractéristique de grossissement de l'image de sortie ;
sur la base du remplacement de la première image par la seconde image en tant qu'image de sortie,
déterminer un gain de balance des blancs corrigé ($W_{cgb}$) en corrigeant un gain de balance des blancs ($W_{gb}$) obtenu pour la seconde image sur la base d'une première balance des couleurs de la première image et d'une seconde balance des couleurs de la seconde image ;
obtenir un gain de balance des blancs filtré ($W_{fgb}$) sur la base du gain de balance des blancs ($W_{gb}$) et du gain de balance des blancs corrigé ($W_{cgb}$) pour modifier en douceur le gain de balance des blancs appliqué à la seconde image, à partir du gain de balance des blancs corrigé ($W_{cgb}$) jusqu'au gain de balance des blancs ($W_{gb}$) durant un certain temps pour obtenir l'image de sortie ; et
émettre en sortie l'image de sortie sur la base d'une correction à la seconde image sur la base du gain de balance des blancs filtré de la seconde image.

2. Appareil d'imagerie selon la revendication 1, ledit au moins un processeur étant configuré pour corriger le gain de balance des blancs de la seconde image de sorte qu'une différence entre une première valeur correspondant à la première balance des couleurs et une seconde valeur correspondant à la seconde balance des couleurs soit inférieure ou égale à une certaine valeur.

3. Appareil d'imagerie selon la revendication 1, ledit au moins un processeur étant en outre configuré pour diviser la seconde image en une pluralité de blocs et pour déterminer le gain de balance des blancs sur la base d'une valeur intégrée ou d'une valeur moyenne de valeurs de pixel RVB comprises dans chacun de la pluralité de blocs.

4. Appareil d'imagerie selon la revendication 1, ladite première balance des couleurs étant obtenue par un premier processeur,

ladite première unité d'imagerie et ledit premier processeur étant compris dans un premier module d'imagerie,

ladite seconde balance des couleurs étant obtenue par un second processeur,

ladite seconde unité d'imagerie et ledit second processeur étant compris dans un second module d'imagerie,

ledit au moins un processeur étant en outre configuré pour couper l'alimentation du second module d'imagerie lorsque la première image est émise en sortie en tant qu'image de sortie, et couper l'alimentation du premier module d'imagerie lorsque la seconde image est émise en sortie en tant qu'image de sortie.

5. Appareil d'imagerie selon la revendication 1, ladite première unité d'imagerie et ladite seconde unité d'imagerie possédant des distances focales et des sensibilités spectrales différentes.

6. Procédé d'imagerie comprenant :

la capture d'une première image d'un sujet par une première unité d'imagerie ;

la capture d'une seconde image d'un sujet par une seconde unité d'imagerie ;

l'obtention sélective, par au moins un processeur, de l'une de la première image et de la seconde image à émettre en sortie en tant qu'image de sortie sur la base d'une caractéristique de grossissement de l'image de sortie ;

sur la base du remplacement de la première image par la seconde image en tant qu'image de sortie,

la détermination d'un gain de balance des blancs corrigé ($W_{cgb}$) en corrigeant un gain de balance des blancs ($W_{gb}$) obtenu pour la seconde image sur la base d'une première balance des couleurs de la première image et d'une seconde balance des couleurs de la seconde image ;

l'obtention d'un gain de balance des blancs filtré ($W_{fgb}$) sur la base du gain de balance des blancs ($W_{gb}$) et du gain de balance des blancs corrigé ($W_{cgb}$) pour modifier en douceur le gain de balance des blancs appliqué à la seconde image à partir du gain de balance des blancs corrigé ($W_{cgb}$) jusqu'au gain de balance des blancs ($W_{gb}$) durant un certain temps, pour obtenir l'image de sortie ; et

l'émission en sortie de l'image de sortie sur la base d'une correction de la seconde image sur la base du gain de balance des blancs filtré de la seconde image.

7. Procédé d'imagerie selon la revendication 6, ledit gain de balance des blancs de la seconde image étant corrigé de sorte qu'une différence entre une première valeur correspondant à la première balance des couleurs et une seconde valeur correspondant à la seconde balance des couleurs soit inférieure ou égale à une certaine valeur.

[Fig. 1A]

[Fig. 1B]

[Fig. 1C]

EP 3 656 121 B1

10

FIRST IMAGING MODULE — 11a

IMAGE PROCESSOR

111a — FIRST IMAGING UNIT

STATISTICAL ACQUISITION UNIT — 112a

114a — PROCESSOR

GAIN ACQUISITION UNIT — 113a

115a — LOW-PASS FILTER

EXPOSURE CONTROLLER — 116a

12 — IMAGE REPLACEMENT UNIT

SECOND IMAGING MODULE — 11b

IMAGE PROCESSOR

111b — SECOND IMAGING UNIT

STATISTICAL ACQUISITION UNIT — 112b

114b — PROCESSOR

GAIN ACQUISITION UNIT — 113b

115b — LOW-PASS FILTER

EXPOSURE CONTROLLER — 116b

PARAMETER STORAGE (FOR SECOND IMAGING MODULE) — 13b

PARAMETER STORAGE (FOR FIRST IMAGING MODULE)

BLOCK STATISTICS IMAGE

PARAMETER FOR COLOR REPRODUCTION CORRECTION

GAMMA CORRECTION TABLE

WHITE BALANCE GAIN

13a

11 { 11a / 11b

13 { 13a / 13b

15 — IMAGE STORAGE

14 — IMAGE DISPLAY

[Fig. 2]

[Fig. 3]

[Fig. 4A]

```
                              ┌──────────────┐
                              │    START     │
                              └──────┬───────┘
                                     │
                                     ▼
        ┌────────────┐   ┌────────────────────────┐
 S101 ──│            │   │   ACQUIRE CAPTURED IMAGE │
        └────────────┘   │   AND DIVIDE IT INTO BLOCKS│
                         └────────────┬───────────┘
                                      │
                                      ▼
 S102 ──────────         ┌────────────────────────┐
                         │  ACQUIRE BLOCK STATISTICS │
                         └────────────┬───────────┘
                                      │
                                      ├───────────────────────┐      S105
                                      │                       │
                                      ▼                       ▼
 S103 ──      ┌────────────────────────┐   ┌────────────────────────┐
              │ ACQUIRE AUTO WHITE BALANCE│  │  DETERMINE INTEGRATED  │
              └────────────┬───────────┘   │    BLOCK STATISTICS    │
                           │                └────────────┬───────────┘
                           ▼                             │
 S104 ──  ┌────────────────────────────┐                │
          │ ACQUIRE WHITE BALANCE GAIN AND│              │
          │  COLOR REPRODUCTION MATRIX   │               │
          └────────────┬───────────────┘                │
                       │◄────────────────────────────────┘
                       ▼
 S106 ──  ┌────────────────────────────────┐
          │ MULTIPLY WHITE BALANCE GAIN AND │
          │  COLOR REPRODUCTION MATRIX BY   │
          │    INTEGRATED BLOCK STATISTICS  │
          └────────────┬───────────────────┘
                       ▼
 S107 ──  ┌────────────────────────┐
          │  DETERMINE COLOR BALANCE │
          └────────────┬───────────┘
                       ▼
                      ( 1 )
```

[Fig. 4B]

```
                          ┌──────────────┐
                          │    START     │
                          └──────────────┘
                                 │
                                 ▼
          ┌──────────────────────────────────────┐
  S201 ───│    ACQUIRE CAPTURED IMAGE             │
          │    AND DIVIDE IT INTO BLOCKS          │
          └──────────────────────────────────────┘
                                 │
                                 ▼
          ┌──────────────────────────────────────┐
  S202 ───│    ACQUIRE BLOCK STATISTICS           │
          └──────────────────────────────────────┘
                  │                                          S205
                  │                             ─────────────────
                  ▼                                 ▼
  ┌──────────────────────────────┐   ┌──────────────────────────────┐
  S203 ─│ ACQUIRE AUTO WHITE BALANCE │  │    DETERMINE INTEGRATED      │
  └──────────────────────────────┘   │    BLOCK STATISTICS          │
                  │                   └──────────────────────────────┘
                  ▼                                 │
  ┌──────────────────────────────┐                 │
  │ ACQUIRE WHITE BALANCE GAIN AND │                │
  S204 ─│ COLOR REPRODUCTION MATRIX │               │
  └──────────────────────────────┘                 │
                  │◄────────────────────────────────┘
                  ▼
  ┌──────────────────────────────┐
  │ MULTIPLY WHITE BALANCE GAIN AND │
  S206 ─│ COLOR REPRODUCTION MATRIX BY │
  │ INTEGRATED BLOCK STATISTICS  │
  └──────────────────────────────┘
                  │
                  ▼
  ┌──────────────────────────────┐
  S207 ─│  DETERMINE COLOR BALANCE   │
  └──────────────────────────────┘
                  │
                  ▼
                ( 2 )
```

[Fig. 4C]

```
                              ②
         S301                 │
   ①──────┐         ┌─────────▼──────────────────────┐
          └────────▶│ ACQUIRE DIFFERENTIAL CORRECTION GAIN │
                    └────────────────┬────────────────┘
                                     │
                    ┌────────────────▼────────────────┐
   S302             │      ACQUIRE WHITE BALANCE       │
                    │      GAIN AFTER CORRECTION       │
                    └────────────────┬────────────────┘
                                     │
                    ┌────────────────▼────────────────┐
   S303             │      ACQUIRE WHITE BALANCE       │
                    │      GAIN AFTER FILTERING        │
                    └────────────────┬────────────────┘
                                     │
                    ┌────────────────▼────────────────┐
   S304             │       CORRECT CAPTURED IMAGE     │
                    └────────────────┬────────────────┘
                                     │
                            ┌────────▼────────┐
                            │      END        │
                            └─────────────────┘
```

[Fig. 5A]

[Fig. 5B]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017230585 A1
- WO 2014199338 A2